(19) Europäisches Patentamt
European Patent Office
Office européen des brevets

(11) EP 0 663 713 B1

(12) # EUROPÄISCHE PATENTSCHRIFT

(45) Veröffentlichungstag und Bekanntmachung des Hinweises auf die Patenterteilung:
**11.08.1999 Patentblatt 1999/32**

(51) Int Cl.[6]: **H02J 3/18**

(21) Anmeldenummer: **95810034.9**

(22) Anmeldetag: **17.01.1995**

(54) **Verfahren zur adaptiven Kompensation der Rückwirkungen einer nichtlinearen Last sowie Vorrichtung zur Durchführung des Verfahrens**

Method for adaptive compensation of effects of a non linear load and device therefore

Méthode pour la compensation adaptative des effets d'une charge non linéaire ainsi que dispositif pour la mise en oeuvre du procédé

(84) Benannte Vertragsstaaten:
**CH DE FR GB LI**

(30) Priorität: **18.01.1994 CH 14594**

(43) Veröffentlichungstag der Anmeldung:
**19.07.1995 Patentblatt 1995/29**

(73) Patentinhaber: **THOMCAST AG
5300 Turgi (CH)**

(72) Erfinder:
- **Puri, Narindra Nath
Monmouth Junction, NJ 08852 (US)**
- **Tomljenovic, Nenad
CH-5415 Nussbaumen (CH)**

(74) Vertreter: **Hug Interlizenz AG
Nordstrasse 31,
Postfach 127
8035 Zürich (CH)**

(56) Entgegenhaltungen:
**DE-A- 3 429 116 US-A- 4 811 236**

- **IEEE TRANSACTIONS ON POWER SYSTEMS, Bd.4, Nr.2, Mai 1989, NEW YORK US Seiten 443 - 551 J. SMITH ET AL. 'An Enhanced LQ Adaptative VAR Unit Controller for Power System Damping'**
- **IEEE TRANSACTIONS ON POWER SYSTEMS, Bd.1, Nr.3, August 1986, NEW YORK US Seiten 110 - 120 M. COX 'A new static VAR compensator for an arc furnace'**
- **EPE'89 , 3RD EUROPEAN CONFERENCE ON POWER ELECTRONICS AND APPLICATIONS, AACHEN, 9-12 OCTOBER 1989, THIRD DAY OF CONFERENCE , VOLUME 3, EDITORS: W. LEONHARD ET AL. Seiten 1181 - 1189 J. ENSLIN ET AL. 'Adaptive, closed-loop control of dynamic power filters as fictitious compensators'**
- **EUROPEAN TRANSACTIONS ON ELECTRICAL POWER ENGINEERING, Bd.3, Nr.1, Februar 1993, BERLIN, DE Seiten 67 - 74 L. CZARNECKI 'Power Factor Improvement of Three-Phase Unbalanced Loads with Non-sinusoidal Supply Voltage'**
- **CONFERENCE RECORD OF THE 1987 IEEE INDUSTRY APPLICATIONS SOCIETY ANNUAL MEETING , OCTOBER 18-23 1987, ATLANTA US Seiten 835 - 845 L. MORAN ET AL. 'Analysis and Design of Three-phase Synchronous Solid-state VAR Compensator'**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

TECHNISCHES GEBIET

Die vorliegende Erfindung bezieht sich auf das Gebiet der Stromversorgungen. Sie betrifft ein Verfahren zur adaptiven Kompensation der Rückwirkungen einer nichtlinearen, an ein Wechselspannungsnetz mit einer Netzspannung v(t) und einem Netzstrom i(t) angeschlossenen Last auf das Wechselspannungsnetz, bei welchem Verfahren Strom und Spannung gemessen, nach Massgabe der jeweiligen Messwerte ein Korrektursignal c(t) erzeugt, und nach Massgabe des Korrektursignals c(t) eine Korrekturgrösse zur Kompensation harmonischer Komponenten und/oder zur Korrektur des Leistungsfaktors cosφ zwischen Netz und Last eingespeist wird, welche Korrekturgrösse in ihrem zeitlichen Verlauf dem Korrektursignal c(t) nachgebildet ist.

Die Erfindung betrifft weiterhin eine Vorrichtung zur Durchführung des Verfahrens, umfassend einen Stromsensor, einen ersten Spannungssensor, einen Steuerteil zur Erzeugung des Korrektursignals und einen Leistungsteil zur Abgabe der Korrekturgrösse, wobei die Sensoren an einen ersten Spannungssignaleingang bzw. an einen Stromsignaleingang des Steuerteils angeschlossen sind, und der Ausgang des Steuerteils mit dem Eingang des Leistungsteils über eine erste Steuerleitung verbunden ist.

Ein solches Verfahren und eine solche Vorrichtung sind z.B. aus dem Artikel Richard S. Burwen, IEEE Spectrum, Februar 1993, S.32-37 bekannt. Eine ähnliche Lösung, die als aktives harmonisches Filter bezeichnet wird, sich aber nur mit der Kompensation der Harmonischen befasst, ist in dem Artikel von D. Mathisen, Power Quality, September 1992 Proceedings, S. 390-400 (1992), vorgeschlagen worden.

STAND DER TECHNIK

Mit der Weiterentwicklung der Leistungselektronik werden in zunehmendem Masse Stromversorgungen eingesetzt, die aufgrund ihrer Arbeitsweise mit geschalteten Leistungshalbleitern nichtlineare Lasten für das Versorgungsnetz darstellen und dementsprechend nicht nur harmonische Stromkomponenten erzeugen, sondern auch einen von 1,0 abweichenden Leistungsfaktor (cos φ) zur Folge haben. Wenn die harmonischen Stromkomponenten nicht kompensiert werden, erzeugen sie in Wechselwirkung mit der Impedanz der Quelle unerwünschte nicht-sinusförmige Spannungen im Netz. Elektronische Lasten verursachen oft auch Stromformen, bei welchen die "Total Harmonic Distortion" (THD) zwischen 70 und 100 % liegt und "crest factors" von 2 bis 3 nicht unüblich sind. Oft werden harmonische Ströme erzeugt, deren Amplitude in der gleichen Grössenordnung liegt, wie die der Grundwelle.

Alle diese Effekte können zu Störungen anderer Verbraucher führen, zur Beeinflussung von benachbarten Netzen, übermässiger Erwärmung von einzelnen Phasenleitern und neutralem Leiter, zusätzlichen Verlusten in Transformatoren und anderen Geräten, dem Ansprechen von Schaltern, Interferenzen mit Telephonleitungen etc.

In der Vergangenheit wurden überwiegend passive Techniken wie z.B. "trap"-Filter mit Kondensatorbänken, zur Kompensation derartiger Verzerrungen verwendet. Selbstverständlich sind diese Methoden nicht-adaptiv, nicht-umfassend und wenig effektiv, d.h. sie können nur begrenzt an sich ändernde Bedingungen angepasst werden und erlauben nur in einem begrenzten Umfang eine Kompensation bzw. Korrektur.

Es sind deshalb auch bereits adaptive Korrekturmethoden vorgeschlagen worden, die beispielsweise unter dem Stichwort "active filter" oder "active power line conditioner" (S. A. Lane und R. M. Petrecca, Power Quality, September 1992 Proceedings, S. 311-323, (1992)) bekannt sind. Bei diesen Methoden werden geschaltete Filter, die zwischen dem Netz und der nichtlinearen Last angeordnet sind, dazu verwendet, einen Korrekturstrom zu erzeugen, der dafür sorgt, dass im wesentlichen nur noch die Grundschwingung des Stromes aus dem Netz direkt entnommen wird, während die höheren Harmonischen vom Filter selbst bereitgestellt werden.

Obgleich die geschalteten Filter einen grösseren Anpassungsspielraum haben als die passiven Systeme, müssen sie dennoch auf die jeweilige Anwendung zugeschnitten werden und erlauben aufgrund ihres inneren Aufbaus nur eine vergleichsweise grobe Korrektur, da hier nur mit wenigen (in Brückenschaltung angeordneten) Leistungsschaltern gearbeitet wird, die über ihren Zündzeitpunkt gesteuert werden. Darüber hinaus ist es schwierig, mit derartigen Systemen eine Verbesserung des Leistungsfaktors zu erreichen.

Aus dem eingangs genannten Artikel von Richard S. Burwen ist eine mit einem PWM-Leistungsverstärker ausgestattete, rückgekoppelte Korrekturschaltung für Harmonische bekannt, bei der Strom und Spannung direkt am Netzausgang gemessen und aus den Messwerten in einer Signalverarbeitungsschaltung ein Korrektursignal erzeugt, das Korrektursignal in dem nachfolgenden Leistungsverstärker zu einer Korrekturgrösse verstärkt, und die Korrekturgrösse über einen Transformator parallel zur Last eingespeist wird. Diese Art der Regelschleife wird sowohl für die Kompensation der Harmonischen als auch für die Korrektur des Leistungsfaktors vorgeschlagen, wobei über die Art der Signalbildung keine Aussagen gemacht werden. Nachteilig ist hierbei, dass die Regelschleife in ihrem Regelverhalten, z.B. der Regelschnelligkeit, der Stabilität oder der Regelgenauigkeit, an den jeweiligen Anwendungsfall angepasst sein muss, was zu Einschränkungen in der Flexibilität führt.

Aehnliches gilt auch für die in der DE-A-34 29 116 beschriebene Regelung, bei der durch eine gleitende Fourieranalyse die Fourierkoeffizienten des gemessenen Signals bestimmt und zur Regelung verwendet werden.

DARSTELLUNG DER ERFINDUNG

Es ist daher Aufgabe der Erfindung, ein Verfahren sowie eine Vorrichtung anzugeben, mit welchen die Rückwirkung einer nichtlinearen Last auf das Netz, insbesondere durch Erzeugung Harmonischer und Verschlechterung des Leistungsfaktors, sicher und flexibel kompensiert werden kann.

Die Aufgabe wird bei einem Verfahren der eingangs genannten Art dadurch gelöst, dass

(a) der durch die Last fliessende Strom y(t) und die an der Last abfallende Lastspannung x(t) gemessen werden;
(b) die Last durch eine mathematische Gleichung nachgebildet wird, welche die Abhängigkeit des Laststromes y (t) von der Lastspannung x(t) mit einer vorgegebenen Anzahl zu bestimmender Koeffizienten beschreibt;
(c) die Lastspannung x(t) und der Laststrom y(t) periodisch zu den Zeitpunkten $t_m = mT_s$ (m ganze Zahl; $T_s$ Abtastperiode) abgetastet werden;
(d) aus den Abtastwerten $x(t_m)$ und $y(t_m)$ fortlaufend in Echtzeit die Koeffizienten der Gleichung berechnet werden; und
(e) aus den berechneten Koeffizienten das Korrektursignal c(t) abgeleitet wird.

Durch die Berechnung eines kontinuierlichen Korrektursignals aus den direkt an der Last auftretenden Grössen in Echtzeit und die Steuerung der Korrekturgrösse nach Massgabe des Korrektursignals wird es möglich, nicht nur bei beliebigen oder sich ändernden nichtlinearen Lasten die höheren Harmonischen, sondern auch gleichzeitig einen eventuell von 1,0 abweichenden Leistungsfaktor (cos φ) mit grosser Genauigkeit zu eliminieren, ohne dass die Nachteile einer Regelschleife in Kauf genommen werden müssen.

Eine erste bevorzugte Ausführungsform der Erfindung zeichnet sich dadurch aus, dass

(a) eine Gleichung der Form

$$y(t) = \sum_{p=1}^{M} a_p x^p (t - t_d)$$

mit den Koeffizienten $a_1,...,a_M$ und der Verzögerungszeit $t_d$ verwendet wird;
(b) $a_1,...,a_M$ und die Verzögerungszeit $t_d$ berechnet werden; und
(c) aus den Koeffizienten $a_1,...,a_M$ und der Verzögerungszeit $t_d$ das Korrektursignal c(t) abgeleitet wird.

Eine zweite bevorzugte Ausführungsform des erfindungsgemässen Verfahrens zeichnet sich dadurch aus, dass als Korrekturgrösse eine Korrekturspannung $v_c(t)$ und/oder ein Korrekturstrom $i_c(t)$ erzeugt und zu der Netzspannung v(t) bzw. zum Netzstrom i(t) addiert wird.

Eine dritte bevorzugte Ausführungsform des erfindungsgemässen Verfahrens zeichnet sich dadurch aus, dass die Korrekturspannung $v_c(t)$ bzw. der Korrekturstrom $i_c(t)$ durch eine Verstärkung des Korrektursignals c(t) erzeugt wird.

Die erfindungsgemässe Vorrichtung zur Durchführung des Verfahrens nach Anspruch 1, die einen Stromsensor, einen ersten Spannungssensor, einen Steuerteil zur Erzeugung eines Korrektursignals c(t) und einen Leistungsteil zur Abgabe einer Korrekturgrösse umfasst, wobei die Sensoren an einen ersten Spannungssignaleingang bzw. an einen Stromsignaleingang des Steuerteils angeschlossen sind, und der Ausgang des Steuerteils mit dem Eingang des Leistungsteils über eine erste Steuerleitung verbunden ist, ist dadurch gekennzeichnet, dass der Steuerteil einen ersten Korrekturrechner zum Berechnen der Koeffizienten einer mathematischen Gleichung in Echtzeit umfasst, welche mathematische Gleichung die Last nachbildet und die Abhängigkeit des Laststromes y(t) von der Lastspannung x(t) beschreibt, und dass der Steuerteil einen nachgeschalteten ersten Signalgenerator zum Erzeugen des Korrektursignals c(t) in Abhängigkeit von den berechneten Koeffizienten umfasst.

Eine erste bevorzugte Ausführungsform der erfindungsgemässen Vorrichtung zeichnet sich dadurch aus, dass

(a) die Signale von dem Stromsignaleingang und dem ersten Spannungssignaleingang jeweils über einen A/D-Wandler und eine nachgeschaltete FFT-Schaltung auf den ersten Korrekturrechner gelangen;

(b) der Leistungsteil einen Spannungsausgang aufweist;

(c) zwischen dem Netz und der Last eine Spannungsadditionsvorrichtung angeordnet ist, welche an den Spannungsausgang angeschlossen ist;

(d) der erste Spannungssensor zwischen der Spannungsadditionsvorrichtung und der Last angeordnet ist;

(e) zwischen dem Netz und der Spannungsadditionsvorrichtung ein zweiter Spannungssensor vorgesehen ist;

(f) der Steuerteil einen zweiten Spannungssignaleingang aufweist, auf welchen die Signale aus dem zweiten Spannungssensor gegeben werden; und

(g) das Signal von dem zweiten Spannungssignaleingang einerseits direkt auf den ersten Signalgenerator und andererseits über eine Rechenschaltung auf eine Subtraktionsschaltung gegeben und dort von dem Signal vom Stromsignaleingang abgezogen und das resultierende Differenzsignal ebenfalls auf den ersten Signalgenerator gegeben wird.

Eine zweite bevorzugte Ausführungsform der erfindungsgemässen Vorrichtung zeichnet sich dadurch aus, dass

(a) der Leistungsteil einen Stromausgang aufweist;

(b) das Korrektursignal c(t) aus dem Signalgenerator auf den Eingang eines im Leistungsteil angeordneten Leistungsverstärkers gegeben wird; und

(c) der Leistungsverstärker als digitaler, bipolarer Pulsstufenverstärker ausgebildet ist, welcher eine Vielzahl von gleichartigen Schaltstufen umfasst, deren Ausgangsgleichspannung mittels entsprechender Schalter wahlweise addiert oder subtrahiert werden können.

Weitere Ausführungsformen ergeben sich aus den abhängigen Ansprüchen.

## KURZE ERLÄUTERUNG DER FIGUREN

Die Erfindung soll nachfolgend anhand von Ausführungsbeispielen im Zusammenhang mit den Figuren näher erläutert werden. Es zeigen

Fig. 1 einen schematisierten Schaltplan für eine Korrekturvorrichtung gemäss einem Ausführungsbeispiel der Erfindung mit einem Steuerteil und einem Leistungsteil für Strom- und/oder Spannungskorrektur;

Fig. 2 den detaillierten Aufbau eines ersten Ausführungsbeispiels für den Steuerteil nach Fig. 1 mit Spannungskorrektur;

Fig. 3 den detaillierten Aufbau eines zweiten Ausführungsbeispiels für den Steuerteil nach Fig. 1 mit Spannungskorrektur und getrennter Kompensation von Harmonischen und Leistungsfaktor;

Fig. 4 einen schematisierten Schaltplan für eine Unterform des Ausführungsbeispiels nach Fig. 1 mit Stromkorrektur;

Fig. 5 beispielhafte Strom- und Spannungskurven in der Anordnung nach Fig. 4;

Fig. 6 den detaillierten Aufbau der Schaltung nach Fig. 4;

Fig. 7 ein bevorzugtes Ausführungsbeispiel für die Realisierung des Leistungsverstärkers aus Fig. 6; und

Fig. 8 den schematischen Aufbau einer Korrekturschaltung nach der Erfindung für ein Drehstromnetz.

## WEGE ZUR AUSFÜHRUNG DER ERFINDUNG

Die vorliegende Erfindung bezieht sich auf ein Verfahren sowie eine Vorrichtung, welche bei einer an einem Wechselspannungsnetz liegenden nichtlinearen Last den Leistungsfaktor ($\cos \varphi$) auf einen Wert nahe 1,0 ($\cos \varphi \cong 1$) verbessert und gleichzeitig die höheren Harmonischen in der Stromversorgung kompensiert, indem adaptiv die von der nichtlinearen Last (Computer, Faxgerät, Ofen, Umrichter etc.) benötigten höheren Harmonischen berechnet und aus einer Hilfsstromversorgung zugefügt werden. Wenn daher diese Vorrichtung zugeschaltet wird, liefert die Hauptstromversorgung lediglich die in Phase liegende Grundfrequenz für die Last, so dass die mit den höheren Harmonischen und dem verringerten Leistungsfaktor verbundenen Probleme beseitigt sind.

Figur 1 beschreibt die grundlegende Idee und den allgemeinen schematischen Aufbau der Vorrichtung. Eine nichtlineare Last 4 ist an ein Wechselspannungsnetz angeschlossen, welches durch eine ideale Spannungsquelle 1 und eine Netzimpedanz 2 repräsentiert ist und eine Netzspannung v(t) abgibt. Durch die Last 4 fliesst ein Laststrom y(t), an der Last 4 selbst fällt eine Lastspannung x(t) ab. Der Laststrom y(t) hat die folgende Form:

$$y(t) = \sum_{p=1}^{M} a_p x^p (t - t_d)$$

wobei x(t) die Lastspannung ist, welche die Form $(V_m/\sqrt{2})\sin\omega_0 t$ annehmen kann, wobei $\omega_0$ die Versorgungsfrequenz (Netzfrequenz) bedeutet. Die Koeffizienten an (n=1,2,...,M) repräsentieren die Amplituden der unterschiedlichen Harmonischen. Der Leistungsfaktor der Grundschwingung steht wie folgt in Beziehung zu der Phasenverschiebung $\varphi$ bzw. der Zeitverzögerung $t_d$:

$$\cos\varphi = \cos\omega_0 t_d$$

In Uebereinstimmung mit der Erfindung werden in einer zwischen der Last 4 und dem Netz angeordneten Korrekturvorrichtung 3 zumindest die Signale x(t) und y(t) mittels eines ersten Spannungssensors 7 und eines Stromsensors 8 gemessen und über einen ersten Spannungssignaleingang 16 und einen Stromsignaleingang 17 in einen Steuerteil 10 eingespeist, der adaptiv die unbekannten Koeffizienten an und $t_d$ berechnet. Im Steuerteil 10 wird eine entsprechende Korrektursignal c(t) erzeugt, welche über eine erste Steuerleitung 13 an einen Leistungsteil 9 der Vorrichtung weitergeleitet wird.

Dieser Teil der Korrekturvorrichtung 3 erzeugt seinerseits einen Korrekturstrom $i_c(t)$ (am Stromausgang 12) und/oder eine Korrekturspannung $v_c(t)$ (am Spannungsausgang 11), derart, dass der Strom aus der Hauptquelle, nämlich dem Wechselspannungsnetz, nur noch sinusförmig mit der Grundfrequenz $\omega_0$ und einem cos $\varphi$ nahe 1,0 ist. Die Korrekturspannung $v_c(t)$ wird dabei mittels einer Spannungsadditionsschaltung 6 zu der Netzspannung v(t) dazuaddiert. Bei der Arbeitsweise mit einer Korrekturspannung $v_c(t)$ wird zusätzlich ein zweiter Spannungssensor 5 zwischen der Spannungsadditionsschaltung 6 und dem Netz benötigt, welcher die Netzspannung v(t) misst, und dessen Signal über einen zweiten Spannungssignaleingang 15 auf den Steuerteil 10 gegeben wird.

Die Korrekturvorrichtung 3 liefert also die Quadraturkomponente der Grundfrequenz zusammen mit allen höheren Harmonischen, die von der nichtlinearen Last 4 benötigt werden, ausser der in Phase befindlichen Komponente der Grundschwingung, welche von der Hauptstromversorgung (dem Netz) selbst geliefert wird. Massgeblich sind Funktion und Aufbau des Steuerteils 10 und des Leistungsteils 9.

Der Steuerteil 10 arbeitet wie folgt (siehe dazu auch Fig. 2 und 3): Wie bereits oben erwähnt, lautet die Gleichung für die Last 4:

$$(1) \qquad y(t) = \sum_{p=1}^{M} a_p \left[x(t - t_d)\right]^p$$

wobei $a_1,...,a_M$ und $t_d$ unbekannte und zu berechnende Parameter sind. Die Lastspannung x(t) und der Laststrom y(t) werden mittels der Sensoren 7 und 8 und der A/D-Wandler 21a,b alle $T_s$ Sekunden abgetastet ($2NT_s = T_0 = 2\pi/\omega_0$). N soll eine gerade Zahl sein, $t_d$ die (unbekannte) Zeitverzögerung $t_d=\varphi/\omega_0$.

Aus der Annahme:

$$x(t) = \sqrt{2}V \sin \omega_0 t, \qquad x(m) = x(t)|_{t=mTs}$$

folgt:

$$(2) \qquad x(m) = \sqrt{2}V \sin \omega_0 m T_s = \sqrt{2}V \sin (m\frac{\pi}{N})$$

$$x(m - N/2) = \sqrt{2}\, V \sin[(m - N/2)\pi/N]$$

($\pi/2$ Phasenverschiebung von x(t))

$$(3) \qquad y_f(t)=y(t)$$

nach Filterung durch ein Notchfilter mit dem Notch bei $\omega_0$.

Der eine zu bestimmende Parameter, die Zeitverzögerung $t_d$ wird dann wie folgt erhalten:

$$(4) \qquad I_1 = \overline{x(t)y_f(t)} = \frac{1}{2N}\sum_{-N}^{N-1} x(m)y(m) = \frac{Va_1}{\sqrt{2}}\cos\varphi$$

$$(5) \qquad I_2 = \overline{x(t-T_0/4)y_f(t)} = \frac{1}{2N}\sum_{-N}^{N-1} x(m-\frac{N}{2})y(m) = \frac{Va_1}{\sqrt{2}}\sin\varphi$$

Daraus folgt:

$$(6) \qquad \varphi = \tan^{-1} I_2/I_1 = \omega_0 t_d$$

Die Parameter $a_1,\ldots,a_M$ werden wie folgt berechnet:

$$(7) \qquad x(m) = \sum_{-N}^{N-1} X_1(n)W_N^{nm}, \qquad W_N^{nm} = e^{j\frac{\pi}{N}nmf_0}$$

$$2NX_1(n) = \sum_{-N}^{N-1} x(m)W_N^{-nm}$$

$$(8) \qquad y(m) = \sum_{-N}^{N-1} Y(n)W_N^{nm}$$

$$2NY(n) = \sum_{-N}^{N-1} y(m)W_N^{-nm}$$

$\chi_1(n)$ und $\nu(n)$ sind dabei die diskreten Fouriertransformierten von x(t) bzw. y(t). Sie werden über eine Fast-Fourier-Transform(FFT)-Routine berechnet, d.h.

$$\xrightarrow{x(m),y(m)} FFT \xrightarrow{X_1(n),Y(n)}$$

Entsprechend gilt:

$$(9) \qquad x^2(m) = \sum_{-N}^{N-1} X_2(n) W_N^{nm}$$

$$2NX_2(n) = \sum_{-N}^{N-1} x^2(m) W_N^{-nm}$$

wobei

$$(10) \qquad X_2(n) = \sum_{-N}^{N-1} X_1(k) X_1(n-k) \quad .$$

Allgemein gilt:

$$(11) \qquad x^r(m) = \sum_{-N}^{N-1} X_r(n) W_N^{nm}$$

wobei

$$(12) \qquad X_r(n) = \sum_{-N}^{N-1} X_1(k) X_{r-1}(n-k) \quad ,$$

r = 2,3,...,p

Das Einsetzen dieser Grössen in die Gleichung für die Last (1) führt zu dem folgenden Gleichungssystem:

$$(13) \qquad Y(n)\beta^{-n} = \sum_{p=1}^{M} X_p(n) a_p \quad , \quad \beta = e^{-j\frac{2\pi}{2N}\frac{T_d}{T}}$$

für n von -N bis N-1

Die minimale mittlere quadratische Lösung des Gleichungssystems (13) ergibt:

$$(14) \qquad \underline{a} = \left[\underline{M}^* \underline{M}\right]^{-1} \underline{M}^* \hat{\underline{Y}}$$

wobei

$$(15)\qquad \underline{M} = \begin{vmatrix} X_1(-N) & \cdots & X_M(-N) \\ \cdot & & \cdot \\ \cdot & & \cdot \\ \cdot & & \cdot \\ X_1(N-1) & \cdots & X_M(N-1) \end{vmatrix}, \quad \hat{\underline{Y}} = \begin{vmatrix} Y(-N)\beta^{N} \\ \cdot \\ \cdot \\ \cdot \\ Y(N-1)\beta^{-N+1} \end{vmatrix}, \quad \underline{a} = \begin{vmatrix} a_1 \\ \cdot \\ \cdot \\ \cdot \\ a_M \end{vmatrix}$$

Diese Gleichungen werden fortlaufend gelöst und zu jedem Zeitpunkt wird eine auf den neuesten Stand gebrachte Version der Grössen $t_d$ und $\underline{a}$ erhalten. Die erhaltene Information wird dann dazu verwendet, um das Korrektursignal c(t) und damit die vorverzerrten Signale für den Strom und/oder die Spannung zu erzeugen.

Wenn x(t) eine reine Sinusschwingung ist, nimmt die Matrix $\underline{M}$ eine vereinfachte Form an, bei der viele Koeffizienten verschwinden und es ist möglich, für die Invertierung der Matrix Vereinfachungen vorzunehmen, oder sogenannte "Pseudoinverse" zu erhalten. Tatsächlich kann die Wirkung der Last auch durch eine Summe aus Sinus- und Kosinustermen mit variierenden Parametern dargestellt werden. Diese Parameter können auf dieselbe Weise bestimmt werden wie oben dargestellt, mit dem Unterschied, dass die "Pseudoinverse" sehr stark vereinfacht ist.

In dem vorangegangenen Abschnitt wurde im Detail die Berechnung der Parameter $a_1,\ldots,a_M$ und $\varphi$ bzw. $\cos\varphi$ oder $\sin\varphi$ aus dem abgetasteten Laststrom y(t) und der abgetasteten Lastspannung x(t) der nichtlinearen industriellen Last 4 erläutert. Im folgenden Abschnitt wird die eigentliche Kompensation beschrieben. Diese Kompensation kann als eine "vorverzerrte" Spannungskorrektur und/oder als eine Stromkompensation ausgeführt werden.

Bei der vorverzerrten Spannungskorrektur wird wie folgt vorgegangen:

Es sei

$$(16)\qquad x(t - t_d) = v(t - t_d) + v_c(t)$$

v(t)= Netzspannung = $\sqrt{2}\ V \sin \omega_0 t$
$v_c$ (t) = Korrekturspannung

$$(17)\qquad \left|\frac{v_c(t)}{v(t)}\right| << 1$$

Es gelte weiterhin

$$(18)\qquad v(t - t_d) = \sqrt{2}\ V \sin(\omega_0 t - \omega_0 t_d) = v(t)\cos\varphi + v(t - \pi/2\omega_0)\sin\varphi.$$

Der Laststrom y(t) ist gegeben durch

$$(19)\qquad y(t) = \sum_{p=1}^{M} a_p x^p(t - t_d)\quad .$$

Die Korrekturspannung $v_c(t)$ bzw. das Korrektursignal c(t) wird nun so gewählt, dass die Last 4 gezwungen wird, nur die in Phase liegende Komponente der Grundfrequenz aus der Hauptstromversorgung zu ziehen, nämlich

$$(20)\qquad y(t)^* = a_1 v(t)\cos\varphi.$$

der Ausdruck (19) nimmt dann die folgende Form an:

$$0 = a_1 v(t - \pi/2\omega_0)\sin\varphi + (v_c(t)\sum_{n=1}^{M} n a_n [v(t - t_d)]^{n-1}) + \sum_{n=2}^{M} a_n [v(t - t_d)]^n$$

wobei Glieder höherer Ordnung in $v_c(t)$ vernachlässigt werden, oder

$$(21) \qquad v_c(t) = -[a_1 v(t - \pi/2\omega_0)\sin\varphi + \sum_{n=2}^{M} a_n v(t - t_d)^n\ ][\ \sum_{n=1}^{M} n a_n [v(t - t_d)]^{n-1}\ ]^{-1}$$

Lässt man nun gelten:

$$y(t) - y^*(t) = e(t) = a_1 v(t - \pi/2\omega_0)\sin\varphi + \sum_{n=2}^{M} a_n [v(t - t_d)]^n$$

dann folgt

$$(22) \qquad v_c(t) = [-e(t)][\ \sum_{n=1}^{M} n a_n [v(t - t_d)]^{n-1}\ ]^{-1} \quad .$$

Wenn notwendig, können die Korrektur des Leistungsfaktors und die harmonische Spannungskorrektur getrennt durchgeführt werden.

Der Steuerteil 10 aus Fig. 1 ist das rechnende Kernstück der Korrekturvorrichtung 3. Sein interner Aufbau soll nachfolgend für den Fall der kombinierten Spannungs-/Leistungsfaktor-Korrektur (Fig. 2) und den Fall der getrennten Korrektur von Spannung und Leistungsfaktor (Fig. 3) erläutert werden. Der Steuerteil 10 umfasst in beiden Fällen zwei Hauptteile, einen ersten Korrekturrechner 23 zur Ermittlung der Koeffizienten $a_1,...,a_M$ und $\varphi$ und einen ersten Signalgenerator 22. Die Wirkungsweise des ersten Korrekturrechners 23 ist in einem anderen Zusammenhang grundsätzlich aus dem US-Patent Nr. 5,164,678 vom Nov. 1992 und aus der EP-A1-0 513 402 bekannt.

Fig. 2 zeigt den detaillierten Aufbau des Steuerteils 10 für den Fall der kombinierten Korrektur. Die Signale vom ersten Spannungssignaleingang 16 und dem Stromsignaleingang 17 gelangen jeweils über einen A/D-Wandler 21a bzw. 21b und eine nachfolgende FFT-Schaltung 20a bzw. 20b (FFT = Fast Fourier Transform) auf entsprechende Eingänge des ersten Korrekturrechners 23. Das Signal von dem Stromsignaleingang 17 wird gleichzeitig auf den Plus-Eingang einer Subtraktionsschaltung 18 gegeben, deren Ausgang für die Uebermittlung der Funktion e(t) mit einem zweiten Eingang des ersten Signalgenerators 22 verbunden ist. Das Signal von dem zweiten Spannungssignaleingang 15, nämlich v(t), wird einerseits in einer Rechenschaltung 19 unter Zuhilfenahme der Grössen $a_1$ und $\varphi$ gemäss Gleichung (20) in die Funktion y*(t) umgewandelt und auf den Minus-Eingang der Subtraktionsschaltung 18 gegeben, und andererseits direkt auf einen dritten Eingang des ersten Signalgenerators 22 weitergeleitet. Ein weiterer Eingang der Rechenschaltung 19 ist mit dem Ausgang des ersten Korrekturrechners 23 verbunden und erhält von dort die jeweils aktuelle Werte für den Koeffizienten $a_1$ und $\varphi$. Am Ausgang des Signalgenerators ersten 22 steht die gewünschte Korrektursignal c(t) für die Steuerleitung 13 zur Verfügung, die im Leistungsteil 9 (Fig.1) zur Korrekturspannung vc(t) verstärkt wird. Der Leistungsteil 9 ist in diesem Fall eine spannungserzeugende Schaltung.

Fig. 3 zeigt den Aufbau des Steuerteils 10 für den Fall der getrennten Kompensation der Harmonischen und des Leistungsfaktors über die Spannungskorrektur. In diesem Fall wird eine kompensierende Spannung $v_c(t)=v_1(t)+v_2(t)$ erzeugt, wobei $v_1(t)$ den Anteil darstellt, welcher ausschliesslich zur Kompensation der Harmonischen dient, während $v_2(t)$ ausschliesslich für die Optimierung des Leistungsfaktors zuständig ist. $v_2(t)$ hat dabei die Form

$$(23) \qquad v_2(t) = \sqrt{2}\ V_c \sin(\omega t + \varphi_1)$$

mit:

$$(24) \qquad \varphi_1 = -\varphi + \tan^{-1}[\cos\varphi/(1 - \cos\varphi)]$$

$$(25) \qquad V_c = (V \sin \varphi)/\sin(\varphi + \varphi_1)\ ,$$

wobei V den Spannungsmittelwert der Netzspannung $v(t)=\sqrt{2}\ V \sin \omega_0 t$ darstellt.

In der Schaltung 10 nach Fig. 3 werden den beiden Spannungsanteilen $v_1(t)$ und $v_2(t)$ entsprechend zwei getrennte Korrektursignale $c_1(t)$ und $c_2(t)$ erzeugt. Die Erzeugung des ersten Korrektursignals $c_1(t)$ verläuft ähnlich wie in der Schaltung nach Fig. 2, mit dem Unterschied, dass das vom ersten Spannungssignaleingang 16 kommende Signal vor der Abtastung zunächst in einem Verzögerungsglied 24 um $t_d$ verzögert wird und die Funktion y*(t) für die Subtraktionsschaltung 18 aus der Netzspannung v(t) in einer Rechenschaltung 27 nach Massgabe der Gleichung

$$(26) \qquad y^*(t) = a_1 v(t) = \frac{1}{|Z(\omega_0)|}\ v(t)$$

erzeugt wird ($|Z(\omega_0)|$ ist dabei der Betrag der Impedanz der Last 4).

Für die Erzeugung des zweiten Korrektursignals $c_2(t)$ sind ein zweiter Korrekturrechner 26 und ein zweiter Signalgenerator 25 vorgesehen. Der zweite Korrekturrechner 26 berechnet aus der ermittelten Zeitverzögerung $t_d$ bzw. Phasenverschiebung $\varphi$ und der gemessenen Netzspannung v(t) gemäss Gleichungen (24) und (25) die Werte $V_c$ und $\varphi_1$ und gibt diese an den zweiten Signalgenerator 25 weiter. Der zweite Signalgenerator 25 erzeugt daraus nach Massgabe der Gleichung (23) das zweite Korrektursignal $c_2$ (t).

Während bisher im Zusammenhang mit den Figuren 2 und 3 eine Kompensation von Leistungsfaktor und Harmonischen über eine Korrekturspannung $v_c(t)$ erläutert worden ist, soll nachfolgend die Kompensation mittels eines Korrekturstromes $i_c(t)$ beschrieben werden. Bei der Kompensation mittels eines Korrekturstromes wird wie folgt vorgegangen:

Es sei

$$(27) \qquad y(t) = i(t) + i_c(t)$$

wobei

$$(28) \qquad y(t) = \text{Laststrom} = a_1 v(t)\cos\varphi + a_1 v(t - \pi/2\omega_0)\sin\varphi + \sum_{n=2}^{M} a_n v(t - t_d)^n$$

$$(29) \qquad i(t) = \text{gewünschter Strom aus Hauptstromversorgung} = a_1(t)v(t)\cos\varphi.$$

Dann folgt:

$$(30) \qquad i_c(t) = \text{Kompensationsstrom} = a_1 v(t - \pi/2\omega_0)\sin\varphi + \sum_{n=2}^{M} a_n v(t - t_d)^n$$

Die sich aus Fig. 1 für diesen Fall ergebende vereinfachte Anordnung ist schematisch in Fig. 4 wiedergegeben, wobei gleiche Schaltungsteile mit gleichen Bezugszeichen versehen sind. Die Funktionsweise ist im Zusammenhang mit den obigen Erläuterungen zu Fig. 1 selbsterklärend. Beispielhafte zeitliche Verläufe der verschiedenen Ströme und Spannungen für die Anordnung nach Fig. 4 sind in den Fig. 5a-c dargestellt. Die Netzspannung v(t)=x(t) wird als sinusförmig angenommen, während der Laststrom y(t) als phasenverschobener, pulsartiger Strom vorausgesetzt wird (Fig. 5a). Damit dem Netz ein gleichphasiger Netzstrom i(t) gemäss Fig. 5c entnommen werden kann, muss der Korrekturstrom $i_c(t)$ den in Fig. 5b dargestellten Verlauf haben.

Ein bevorzugtes Ausführungsbeispiel für den inneren Aufbau der Anordnung nach Fig. 4 ist in Fig. 6 wiedergegeben. Der Steuerteil 10 ist ähnlich wie in Fig. 2 aufgebaut. Die Signale aus dem Stromsensor 8 und dem Spannungssensor 7 gelangen über A/D-Wandler 21a,b und FFT-Schaltungen 20a,b auf den Korrekturrechner 23, der in der bereits beschriebenen Weise daraus die Koeffizienten $a_1,...,a_M$ und die Phase φ bzw. $t_d$ berechnet. Die berechneten Werte werden an den Signalgenerator 22 weitergegeben, der daraus unter Verwendung des Spannungssignals x(t) für einen Korrekturstrom $i_c(t)$ gemäss Gleichung (30) eine entsprechende Korrektursignal c(t) erzeugt, die dann im Leistungsteil 9 in den Korrekturstrom umgesetzt wird.

Der Leistungsteil 9 umfasst einen Leistungsverstärker 28, der über eine Gleichrichterstufe 29 aus dem Netz selbst versorgt wird. Bei kleinen Leistungen und Netzspannungen kann als Leistungsverstärker 28 ein herkömmlicher analoger Verstärker oder ein Chopper eingesetzt werden. Bei hohen Leistungen wird als Leistungsverstärker aber bevorzugt ein digitaler, bipolarer Pulsstufenverstärker verwendet. Eine vorteilhafte Ausführungsform eines solchen Pulsstufenverstärkers ist in Fig. 7 wiedergegeben. Der Verstärker umfasst eine Vielzahl von gleichartigen Schaltstufen 30.1,...,30.m. Jede Schaltstufe enthält eine aus mehreren Gleichrichtern D1,...,D4 und einem Kondensator bestehende Gleichrichterschaltung, die an eine entsprechende Sekundärwicklung 33.1,...,33.m eines Netztransformators 32 angeschlossen ist und eine Gleichspannung erzeugt. Diese Ausgangsgleichspannungen der einzelnen Schaltstufen 30.1,...,30.m können mittels entsprechender Schalter S1-S4 in der Stufe wahlweise untereinander addiert oder subtrahiert werden, so dass bei geeigneter Steuerung der Schalter ein Wechselspannungssignal beliebiger Form erzeugt und über einen Ausgangsübertrager 31 galvanisch getrennt als Wechselstrom abgegeben werden kann. Um bei hohen Leistungen einen grossen Frequenzbereich zur Verfügung zu haben, werden als Schalter S1-S4 in den Schaltstufen 30.1,...,30.m vorzugsweise schnelle Leistungshalbleiter-Bauelemente, insbesondere in Form von IGBTs, eingesetzt.

Obgleich bisher die Erfindung nur im Zusammenhang mit einem einphasigen Wechselspannungsnetz erläutert worden ist, ist es selbstverständlich möglich, sie in einem mehrphasigen Drehstromnetz einzusetzen. In diesem Fall muss die notwendige Kompensation bzw. Korrektur für jede einzelne Phase getrennt durchgeführt werden. Die dazu notwendige Anordnung ist in Fig. 8 schematisch wiedergegeben. Die Korrekturvorrichtung 34 enthält für jede der Phasen R, S, T einen Stromsensor 36a-c und einen Spannungssensor 37a-c, die Strom und Spannung an der Last 4 aufnehmen. Die Signale der Sensoren 36a-c und 37a-c werden an eine zugehörige Korrekturschaltung 35a-c weitergegeben, die - im Falle der Stromkorrektur - wie die Schaltung aus Fig. 6 aufgebaut ist. Die Korrekturschaltungen 35a-c werden aus den jeweiligen Phasen mit Strom versorgt und geben einen Korrekturstrom und/oder eine Korrekturspannung in der oben beschriebenen Weise an die entsprechende Phase ab. Die Kompensation in den einzelnen Phasen kann dabei vorteilhafterweise so vorgenommen werden, dass Asymmetrien zwischen den Phasen und damit die Ströme im Nulleiter verschwinden.

Insgesamt ergibt sich mit der Erfindung ein flexible, vielseitig einsetzbare Möglichkeit, die von einer nichtlinearen Last hervorgerufenen negativen Rückwirkungen auf das Versorgungsnetz, nämlich die Erzeugung von Harmonischen und die Verschlechterung des Leistungsfaktors, adaptiv und mit grosser Genauigkeit zu kompensieren.

Die Kompensation kann dabei wahlweise über eine Korrekturspannung und/oder einen Korrekturstrom erfolgen, wobei die Kompensation der Harmonischen und die Kompensation des Leistungsfaktors in Kombination oder getrennt durchgeführt werden können. In manchen Fällen kann es auch zweckmässig sein, den Leistungsfaktor über eine Korrekturspannung und die harmonischen Ströme über einen Korrekturstrom zu korrigieren oder umgekehrt.

Darüber hinaus ist es denkbar, die Erfindung auch zusammen mit herkömmlichen Methoden der Kompensation (Kondensatorbänke und dgl.) zu verwenden, wobei ein Teil der notwendigen Kompensation mit den herkömmlichen Methoden durchgeführt und der Rest durch das erfindungsgemässe Verfahren bewirkt wird. Insbesondere kann eine zusätzliche Flexibilität dadurch erreicht werden, dass der Hauptteil der reaktiven Leistung durch einen (vergleichsweise billigen) statischen Kompensator (Static Var) wie z.B. ein abgestimmtes Filter mit L- und C-Komponenten erzeugt wird, und die Feinabstimmung und Kompensation des Leistungsfaktors sowie die Unterdrückung der höheren Harmonischen separat durch das Verfahren bzw. die Voprrichtung nach der Erfindung durchgeführt werden. Hierdurch lässt sich in vielen Fällen eine besonders kostengünstige Lösung erzielen.

BEZEICHNUNGSLISTE

| | |
|---|---|
| 1 | Spannungsquelle (Netzspannung) |
| 2 | Netzimpedanz |
| 3,34 | Korrekturvorrichtung |
| 4 | Last |
| 5,7 | Spannungssensor |
| 6 | Spannungsadditionsvorrichtung |
| 8 | Stromsensor |
| 9 | Leistungsteil |
| 10 | Steuerteil |
| 11 | Spannungsausgang |
| 12 | Stromausgang |
| 13, 14 | Steuerleitung |
| 15,16 | Spannungssignaleingang |
| 17 | Stromsignaleingang |
| 18 | Subtraktionsschaltung |
| 19,27 | Rechenschaltung |
| 20a,b | FFT-Schaltung |
| 21a,b | A/D-Wandler |
| 22,25 | Signalgenerator |
| 23,26 | Korrekturrechner |
| 24 | Verzögerungsglied |
| 28 | Leistungsverstärker |
| 29 | Gleichrichterstufe |
| 30.1-30.m | Schaltstufe |
| 31 | Ausgangsübertrager |
| 32 | Netztransformator |
| 33.1-33.m | Sekundärwicklung |
| 35a-c | Korrekturschaltung |
| 36a-c | Stromsensor |
| 37a-c | Spannungssensor |
| C | Kondensator |
| c(t) | Korrektursignal |
| $c_1$ (t) | Korrektursignal |
| D1-D4 | Gleichrichter |
| i(t) | Netzstrom |
| $i_c(t)$ | Korrekturstrom |
| S1-S4 | Schalter |
| v(t) | Netzspannung |
| $v_c(t)$ | Korrekturspannung |
| x(t) | Lastspannung |
| y(t) | Laststrom |

**Patentansprüche**

**1.** Verfahren zur adaptiven Kompensation der Rückwirkungen einer nichtlinearen, an ein Wechselspannungsnetz mit einer Netzspannung v(t) und einem Netzstrom i(t) angeschlossenen Last (4) auf das Wechselspannungsnetz, bei welchem Verfahren Strom und Spannung gemessen, nach Massgabe der jeweiligen Messwerte ein Korrektursignal c(t) erzeugt, und nach Massgabe des Korrektursignals c(t) eine Korrekturgrösse zur Kompensation harmonischer Komponenten und/oder zur Korrektur des Leistungsfaktors cosφ zwischen Netz und Last (4) eingespeist wird, welche Korrekturgrösse in ihrem zeitlichen Verlauf dem Korrektursignal c(t) nachgebildet ist, dadurch gekennzeichnet, dass

(a) der durch die Last (4) fliessende Strom y(t) und die an der Last (4) abfallende Lastspannung x(t) gemessen

werden;
(b) die Last (4) durch eine mathematische Gleichung nachgebildet wird, welche die Abhängigkeit des Laststromes y(t) von der Lastspannung x(t) mit einer vorgegebenen Anzahl zu bestimmender Koeffizienten beschreibt;
(c) die Lastspannung x(t) und der Laststrom y(t) periodisch zu den Zeitpunkten $t_m = mT_s$ (m ganze Zahl; $T_s$ Abtastperiode) abgetastet werden;
(d) aus den Abtastwerten $x(t_m)$ und $y(t_m)$ fortlaufend in Echtzeit die Koeffizienten der Gleichung berechnet werden; und
(e) aus den berechneten Koeffizienten das Korrektursignal c(t) abgeleitet wird.

**2.** Verfahren nach Anspruch 1, dadurch gekennzeichnet, dass

(a) eine Gleichung der Form

$$y(t) = \sum_{p=1}^{M} a_p x^p (t - t_d)$$

mit den Koeffizienten $a_1,...,a_M$ und der Verzögerungszeit $t_d$ verwendet wird;
(b) $a_1,...,a_M$ und die Verzögerungszeit $t_d$ berechnet werden; und
(c) aus den Koeffizienten $a_1,...,a_M$ und der Verzögerungszeit $t_d$ das Korrektursignal c(t) abgeleitet wird.

**3.** Verfahren nach Anspruch 2, dadurch gekennzeichnet, dass als Korrekturgrösse eine Korrekturspannung $v_c(t)$ und/oder ein Korrekturstrom $i_c(t)$ erzeugt und zu der Netzspannung v(t) bzw. zum Netzstrom i(t) addiert wird.

**4.** Verfahren nach Anspruch 3, dadurch gekennzeichnet, dass die Korrekturspannung $v_c(t)$ bzw. der Korrekturstrom $i_c(t)$ durch eine Verstärkung des Korrektursignals c(t) erzeugt wird.

**5.** Verfahren nach einem der Ansprüche 1 bis 4, dadurch gekennzeichnet, dass die harmonischen Komponenten kompensiert und der Leistungsfaktor korrigiert werden, und dass das Korrektursignal c(t) als Summe aus zwei Korrektursignalen $c_1(t)$ und $c_2(t)$ gebildet wird, wobei das Korrektursignal $c_1(t)$ für die Kompensation der harmonischen Komponenten und das Korrektursignal $c_2(t)$ für die Korrektur des Leistungsfaktors cos $\varphi$ ausgelegt ist.

**6.** Verfahren nach Anspruch 2, dadurch gekennzeichnet, dass

(a) zur Berechnung der Koeffizienten $a_1,...,a_M$ aus den Abtastwerten $x(t_m)$ und $y(t_m)$ diskrete Fouriertransformierte X(n) bzw. Y(n) gebildet werden;
(b) die Fouriertransformierten X(n) bzw. Y(n) in die Gleichung eingesetzt werden; und
(c) das entstehende Gleichungssystem nach den Koeffizienten $a_1,...,a_M$ aufgelöst wird.

**7.** Vorrichtung zur Durchführung des Verfahrens nach Anspruch 1, umfassend einen Stromsensor (8), einen ersten Spannungssensor (7), einen Steuerteil (10) zur Erzeugung eines Korrektursignals c(t) und einen Leistungsteil (9) zur Abgabe einer Korrekturgrösse, wobei die Sensoren (7 bzw. 8) an einen ersten Spannungssignaleingang (16) bzw. an einen Stromsignaleingang (17) des Steuerteils (10) angeschlossen sind, und der Ausgang des Steuerteils (10) mit dem Eingang des Leistungsteils (9) über eine erste Steuerleitung (13) verbunden ist, dadurch gekennzeichnet, dass der Steuerteil (10) einen ersten Korrekturrechner (23) zum Berechnen der Koeffizienten einer mathematischen Gleichung in Echtzeit umfasst, welche mathematische Gleichung die Last (4) nachbildet und die Abhängigkeit des Laststromes y(t) von der Lastspannung x(t) beschreibt, und dass der Steuerteil (10) einen nachgeschalteten ersten Signalgenerator (22) zum Erzeugen des Korrektursignals c(t) in Abhängigkeit von den berechneten Koeffizienten umfasst.

**8.** Vorrichtung nach Anspruch 7, dadurch gekennzeichnet, dass die Signale von dem Stromsignaleingang (17) und dem ersten Spannungssignaleingang (16) jeweils über einen A/D-Wandler (21a,b) und eine nachgeschaltete FFT-Schaltung (20a,b) auf den ersten Korrekturrechner (23) gelangen.

**9.** Vorrichtung nach Anspruch 8, dadurch gekennzeichnet, dass

(a) der Leistungsteil (9) einen Spannungsausgang (11) aufweist;
(b) zwischen dem Netz und der Last (4) eine Spannungsadditionsvorrichtung (6) angeordnet ist, welche an den Spannungsausgang (11) angeschlossen ist;
(c) der erste Spannungssensor (7) zwischen der Spannungsadditionsvorrichtung (6) und der Last (4) angeordnet ist;
(d) zwischen dem Netz und der Spannungsadditionsvorrichtung (6) ein zweiter Spannungssensor (5) vorgesehen ist;
(e) der Steuerteil (10) einen zweiten Spannungssignaleingang (15) aufweist, auf welchen die Signale aus dem zweiten Spannungssensor (5) gegeben werden; und
(f) das Signal von dem zweiten Spannungssignaleingang (15) einerseits direkt auf den ersten Signalgenerator (22) und andererseits über eine Rechenschaltung (19, 27) auf eine Subtraktionsschaltung (18) gegeben und dort von dem Signal vom Stromsignaleingang (17) abgezogen und das resultierende Differenzsignal ebenfalls auf den ersten Signalgenerator (22) gegeben wird.

**10.** Vorrichtung nach Anspruch 9, dadurch gekennzeichnet, dass

(a) der Ausgang des ersten Korrekturrechners (23) mit einem Eingang der Rechenschaltung (19) in Verbindung steht; und
(b) der erste Signalgenerator (22) ein Korrektursignal c(t) erzeugt, welches gleichzeitig zur Kompensation der höheren Harmonischen als auch zur Korrektur des Leistungsfaktors cosφ geeignet ist.

**11.** Vorrichtung nach Anspruch 9, dadurch gekennzeichnet, dass

(a) neben dem ersten Korrekturrechner (23) und dem ersten Signalgenerator (22) ein zweiter Korrekturrechner (26) und ein zweiter Signalgenerator (25) vorgesehen sind, welche hintereinandergeschaltet sind;
(b) der erste Signalgenerator (22) ein Korrektursignal $c_1(t)$ erzeugt, welches nur zur Kompensation der höheren Harmonischen geeignet ist;
(c) der zweite Signalgenerator (25) ein Korrektursignal $c_2(t)$ erzeugt, welches zur Korrektur des Leistungsfaktors cosφ geeignet ist;
(d) das Signal von dem zweiten Spannungssignaleingang (15) auf einen Eingang des zweiten Korrekturrechners (26) gelangt; und
(e) das Signal von dem ersten Spannungssignaleingang (16) über ein Verzögerungsglied (24) auf den zugehörigen A/D-Wandler (21a) gegeben wird.

**12.** Vorrichtung nach Anspruch 8, dadurch gekennzeichnet, das

(a) der Leistungsteil (9) einen Stromausgang (12) aufweist; und
(b) das Korrektursignal c(t) aus dem Signalgenerator (22) auf den Eingang eines im Leistungsteil (9) angeordneten Leistungsverstärkers (28) gegeben wird.

**13.** Vorrichtung nach Anspruch 12, dadurch gekennzeichnet, dass der Leistungsverstärker (28) als digitaler, bipolarer Pulsstufenverstärker ausgebildet ist, welcher eine Vielzahl von gleichartigen Schaltstufen (30.1,...,30.m) umfasst, deren Ausgangsgleichspannung mittels entsprechender Schalter (S1-S4) wahlweise addiert oder subtrahiert werden können.

**14.** Vorrichtung nach Anspruch 13, dadurch gekennzeichnet, dass als Schalter (S1-S4) in den Schaltstufen (30.1,..., 30.m) schnelle Leistungshalbleiter-Bauelemente, insbesondere in Form von IGBTs, vorgesehen sind.

**15.** Vorrichtung nach Anspruch 14, dadurch gekennzeichnet, dass am Ausgang des Leistungsverstärkers (28) ein Ausgangsübertrager (31) vorgesehen ist.

**16.** Vorrichtung nach einem der Ansprüche 7 bis 15 für ein als Drehstromnetz ausgebildeten Wechselspannungsnetz, dadurch gekennzeichnet, dass jeder Phase (R, S, T) des Drehstromnetzes ein Stromsensor (36a-c) zur Messung des Laststromes und ein Spannungssensor (37a-c) zur Messung der Lastspannung der jeweiligen Phase und eine zugehörige Korrekturschaltung (35a-c) zur Abgabe der jeweiligen Korrekturgrösse zugeordnet ist.

**17.** Verfahren nach einem der Ansprüche 1 bis 6, dadurch gekennzeichnet, dass der Hauptteil der zu kompensierenden reaktiven Leistung durch einen herkömmlichen statischen Kompensator bereitgestellt wird.

## Claims

1. A process for the adaptive compensation of the reactive effects of a nonlinear load (4) when connected to an altemating-voltage network that has a network voltage v(t) and a network current i(t), in the course of which current and voltage are measured, a correction signal c(t) is generated as a function of the measured values, and a correction quantity that is a function of the correction signal c(t) is applied between network and load (4) to compensate for the harmonic components and / or to correct the power factor cos □ □ the correction quantity having a time curve that models the correction signal c(t), characterized in that

   (a) the current y(t) flowing through the load (4), and the load voltage x(t) dropped across the load (4), are measured;

   (b) the load (4) is modelled by a mathematical equation that describes the dependence of the load current y (t) on the load voltage x(t) with a predefined number of coefficients that are to be determined;

   (c) the load voltage x(t) and the load current y(t) are periodically sampled at the instants $t_m = mT_s$ (where m is an integer and $T_s$ is the sampling period);

   (d) the coefficients of the equation are continuously computed in real time from the sampled values $x(t_m)$ and $y(t_m)$; and

   (e) the correction signal c(t) is derived from the computed coefficients.

2. Process as in claim 1, characterized in that

   (a) an equation of the form

$$y(t) = \sum_{p=1}^{M} a_p x^p(t-t_d)$$

   is used with the coefficients $a_1, ..., a_M$ and the delay time $t_d$;

   (b) $a_1, ..., a_M$ and the delay time $t_d$ are computed; and

   (c) the correction signal c(t) is derived from the coefficients $a_1, ..., a_M$ and the delay time $t_d$.

3. Process as in claim 2, characterized in that a correction voltage $v_c(t)$ and / or a correction current $i_c(t)$ is generated and added to the network voltage v(t) or the network current i(t).

4. Process as in claim 3, characterized in that the correction voltage $v_c(t)$ or correction current $i_c(t)$ is generated by amplification of the correction signal c(t).

5. Process as in one of claims 1 to 4, characterized in that the harmonic components are compensated for and the power factor is corrected, and that the correction signal c(t) is formed as the sum of two correction signals $c_1(t)$ and $c_2(t)$, where the correction signal $c_1(t)$ is designed for the compensation of the harmonic components and the correction signal $c_2(t)$ is designed for the correction of the power factor, cos □.

6. Process as in claim 2, characterized in that

   (a) discrete Fourier transforms X(n) or Y(n) are formed in order to compute the coefficients $a_1, ..., a_M$ from the sampled values $x(t_m)$ and $y(t_m)$;

   (b) the Fourier transforms X(n) or Y(n) are entered into the equation; and

   (c) the resulting simultaneous equations are solved for the coefficients $a_1, ..., a_M$.

**7.** Device for performing the process of claim 1, comprising a current sensor (8), a first voltage sensor (7), a control unit (10) for the generation of a correction signal c(t) and a power unit (9) for the delivery of a correction quantity, whereby the sensors (7 or 8) are connected to a first voltage signal input (16) or to a current signal input (17) of the control unit (10), and the output of the control unit (10) is connected to the input of the power unit (9) via a first control line (13), characterized in that the control unit (10) comprises a first correction computer (23) for the computation of the coefficients of a mathematical equation in real time, that this mathematical equation models the load (4) and describes the dependence of the load current y(t) on the load voltage x(t), and that the control unit (10) comprises a post-connected first signal generator (22) for the generation of the correction signal c(t) as a function of the computed coefficients.

**8.** Device as in claim 7, characterized in that the signals from the current signal input (17) and from the first voltage signal input (16) respectively arrive at the first correction computer (23) via an analogue-digital converter (21a, b) and a post-connected Fast Fourier Transform circuit (20a, b).

**9.** Device as in claim 8, characterized in that

(a) the power unit (9) displays a voltage output (11);

(b) a voltage addition device (6) connected to the voltage output (11) is positioned between the network and the load (4);

(c) the first voltage sensor (7) is positioned between the voltage addition device (6) and the load (4);

(d) a second voltage sensor (5) is provided between the network and the voltage addition device (6);

(e) the control unit (10) displays a second voltage signal input (15) to which the signals from the second voltage sensor (5) are delivered; and

(f) the signal from the second voltage signal input (15) is fed, on the one hand, direct to the first signal generator (22) and, on the other hand, via a computing circuit (19, 27) to a subtracting circuit (18) and is subtracted there from the signal from the current signal input (17), and the resulting difference signal is also applied to the first signal generator (22).

**10.** Device as in claim 9, characterized in that

(a) the output of the first correction computer (23) is connected to an input of the computing circuit (19); and

(b) the first signal generator (22) generates a correction signal c(t) that is simultaneously suitable for both the compensation of the higher harmonics and the correction of the power factor cos □.

**11.** Device as in claim 9, characterized in that

(a) besides the first correction computer (23) and the first signal generator (22), a second correction computer (26) and a second signal generator (25) are provided that are series-connected;

(b) the first signal generator (22) generates a correction signal $c_1(t)$ that is suitable only for the compensation of the higher harmonics;

(c) the second signal generator (25) generates a correction signal c2(t) that is suitable for the correction of the power factor cos □;

(d) the signal from the second voltage signal input (15) reaches an input of the second correction computer (26); and

(e) the signal from the first voltage signal input (16) is applied to the associated analogue-digital converter (21a) via a delay element (24).

**12.** Device as in claim 8, characterized in that

(a) the power unit (9) displays a current output (12); and

(b) the correction signal c(t) from the signal generator (22) is applied to the input of a power amplifier (28) positioned in the power unit (9).

**13.** Device as in claim 12, characterized in that the power amplifier (28) is designed as a digital, bipolar cascade pulse amplifier comprising a number of similar switching stages (30.1, ..., 30.m) whose DC output voltage can optionally be added or subtracted by means of appropriate switches (S1-S4).

**14.** Device as in claim 13, characterized in that fast power semiconductor components, particularly in the form of IGBTs, are provided as switches (S1-S4) in the switching stages (30.1, ..., 30.m).

**15.** Device as in claim 14, characterized in that an output transformer (31) is provided for at the output of the power amplifier (28).

**16.** Device as in one of the claims 7 to 15 for an alternating-voltage network in the form of a three-phase network, characterized in that a current sensor (36a-c) for measuring the load current and a voltage sensor (37a-c) for measuring the load voltage and an associated correction circuit (35a-c) for outputting the relevant correction quantity are assigned to each phase (R, S, T) of the three-phase network.

**17.** Process as in one of the claims 1 to 6, characterized in that the major part of the reactive power to be compensated for is supplied by a conventional static compensator.

## Revendications

**1.** Procédé de compensation adaptative des répercussions d'une charge (4) sur le réseau alternatif raccordée à un réseau alternatif avec une tension de réseau v(t) et un courant de secteur i(t), selon lequel le courant et la tension sont mesurés, un signal de correction c(t) est généré en fonction des valeurs de mesure respectives, et une grandeur de correction est injectée pour compenser des composantes harmoniques et/ou pour corriger le facteur de puissance $\cos\varphi$ entre le réseau et la charge (4), grandeur de correction qui reproduit le signal de correction c(t), dans son déroulement temporel, caractérisé en ce que:

a) le courant y(t) traversant la charge (4) et la tension de charge x(t) chutant au niveau de la charge (4) sont mesurés;

b) la charge (4) est reproduite par une équation mathématique qui décrit la dépendance du courant de charge y(t) de la tension de charge x(t) avec un nombre prédéfini de coefficients à déterminer;

c) la tension de charge x(t) et le courant de charge y(t) sont analysés périodiquement aux temps $t_m = mT_s$ (m nombre entier; $T_s$ période d'analyse);

d) à partir des valeurs d'analyse $x(t_m)$ et $y(t_m)$, les coefficients de l'équation sont calculés en continu en temps réel; et

e) le signal de correction c(t) est déduit des coefficients calculés.

**2.** Procédé selon la revendication 1, caractérisé en ce que:

a) on applique une équation de la forme

$$y(t) = \sum_{p=1}^{M} a_p x^p(t-t_d)$$

avec les coefficients $a_1, ..., a_M$ et le temps de retard $t_d$,

b) $a_1, ..., a_M$ et le temps de retard $t_d$ sont calculés; et

c) le signal de correction c(t) est déduit des coefficients $a_1, ..., a_M$ et du temps de retard $t_d$.

**3.** Procédé selon la revendication 2, caractérisé en ce qu'on génère, comme grandeur de correction, une tension de correction $V_c(t)$ et/ou un courant de correction $i_c(t)$, et en ce qu'on l'ajoute à la tension de réseau v(t) ou au courant de réseau i(t).

**4.** Procédé selon la revendication 3, caractérisé en ce que la tension de correction $v_c(t)$ et le courant de correction $i_c(t)$ sont générés par une amplification du signal de correction c(t).

**5.** Procédé selon l'une des revendications 1 à 4, caractérisé en ce que les composantes harmoniques sont compensées et le facteur de puissance est corrigé, et en ce que le signal de correction c(t) est formé en tant que somme de deux signaux de correction $c_1(t)$ et $c_2(t)$, le signal de correction $c_1(t)$ étant conçu en vue de la compensation des composantes harmoniques et le signal de correction $c_2(t)$ pour la correction du facteur de puissance $\cos\varphi$.

**6.** Procédé selon la revendication 2, caractérisé en ce que:

a) des transformées de Fourier discrètes X(n) et Y(n) sont formées pour calculer les coefficients $a_1, ..., a_M$ à partir des valeurs d'analyse $x(t_m)$ et $y(t_m)$;

b) les transformées de Fourier X(n) et Y(n) sont introduites dans l'équation; et

c) le système d'équation est résolu selon les coefficients $a_1, ..., a_M$.

**7.** Dispositif pour la mise en oeuvre du procédé selon la revendication 1, comprenant un capteur de courant (8), un premier capteur de tension (7), un élément de commande (10) pour générer un signal de correction c(t), et un élément de puissance (9) pour foumir une grandeur de correction, les capteurs (7 et 8) étant connectés à une première entrée de signal de tension (16) et à une entrée de signal de courant (17) de l'élément de commande (10), et la sortie de l'élément de commande (10) étant raccordée à l'entrée de l'élément de puissance (9) via une première ligne pilote (13), caractérisé en ce que l'élément de commande (10) comprend un premier calculateur de correction (23) calculant les coefficients d'une équation mathématique en temps réel, ladite équation mathématique reproduisant la charge (4) et décrivant la dépendance du courant de charge y(t) de la tension de charge x(t), et en ce que l'élément de commande (10) comprend un premier générateur de signaux (22) en aval, pour générer le signal de correction c(t) en fonction des coefficients calculés.

**8.** Dispositif selon la revendication 7, caractérisé en ce que les signaux issus de l'entrée de signal de courant (17) et de la première entrée de signal de tension (16) aboutissent au premier calculateur de correction (23), chacun via un convertisseur analogique/numérique (21a, b) et une commande TFR en aval (20a, b).

**9.** Dispositif selon la revendication 8, caractérisé en ce que:

a) l'élément de puissance (9) présente une sortie de tension (11);

b) un dispositif d'addition de tension (6) connecté à la sortie de tension (11) est placé entre le réseau et la charge (4);

c) le premier capteur de tension (7) est placé entre le dispositif d'addition de tension (6) et la charge (4);

d) on prévoit un second capteur de tension (5) entre le réseau et le dispositif d'addition de tension (6);

e) l'élément de commande (10) présente une seconde entrée de signaux de tension (15) à laquelle sont envoyés les signaux issus du second capteur de tension (5); et

f) le signal issu de la seconde entrée de signaux de tension (15) sont envoyés d'une part directement au premier générateur de signaux (22), et d'autre part via un circuit de calcul (19, 27) à un circuit de soustraction (18), et là ils sont retranchés du signal issu de l'entrée de signaux de courant (17), et le signal différentiel résultant est également envoyé au premier générateur de signaux (22).

**10.** Dispositif selon la revendication 9, caractérisé en ce que:

a) la sortie du premier calculateur de correction (23) est en communication avec une entrée du circuit de calcul (19); et

b) le premier générateur de signaux (22) génère un signal de correction c(t) qui peut à la fois compenser les harmoniques supérieurs et corriger le facteur de puissance cosφ.

**11.** Dispositif selon la revendication 9, caractérisé en ce que:

a) outre le premier calculateur de correction (23) et le premier générateur de signaux (22), on a prévu un second calculateur de correction (26) et un second générateur de signaux (25), qui sont connectés en série;

b) le premier générateur de signaux (22) génère un signal de correction $c_1(t)$ qui ne convient que pour la compensation des harmonique supérieurs;

c) le second générateur de signaux (25) génère un signal de correction $c_2(t)$ qui convient pour la correction du facteur de puissance cosφ.

d) le signal sortant de la seconde entrée de signaux de tension (15) aboutit à une entrée du second calculateur de correction (26); et

e) le signal sortant de la première entrée de signaux de tension (16) est envoyé au convertisseur analogique/numérique correspondant (21a) via un temporisateur (24).

**12.** Dispositif selon la revendication 8, caractérisé en ce que:

a) l'élément de puissance (9) présente une sortie de courant (12); et

b) le signal de correction c(t) sortant du générateur de signaux (22) est envoyé à l'entrée d'un amplificateur de puissance (28) prévu dans l'élément de puissance (9).

**13.** Dispositif selon la revendication 12, caractérisé en ce que l'amplificateur de puissance (28) est réalisé sous forme d'amplificateur à paliers d'impulsions numérique bipolaire, qui comprend une multitude de paliers de commande (30.1, ..., 30.m) du même type, dont la tension continue de sortie peut être sélectivement additionnée ou soustraite au moyen d'opérateurs correspondants (S1-S4).

**14.** Dispositif selon la revendication 13, caractérisé en ce qu'on prévoit des composants de puissance à semi-conducteur rapides, en particulier sous forme de composants intégrés, en tant qu'opérateurs (S1-S4) dans les paliers de commande (30.1, ..., 30.m).

**15.** Dispositif selon la revendication 14, caractérisé en ce qu'un transformateur de sortie (31) est prévu à la sortie de l'amplificateur de puissance (28).

**16.** Dispositif selon l'une des revendications 7 à 15 pour un réseau altematif conçu comme réseau triphasé, caractérisé en ce que chaque phase (R, S, T) du réseau triphasé se voit associer un capteur de courant (36a-c) mesurant le courant de charge, et un capteur de tension (37a-c) mesurant la tension de charge de la phase concernée et un circuit de correction correspondant (35a-c) foumissant la grandeur de correction correspondante.

**17.** Procédé selon l'une des revendications 1 à 6, caractérisé en ce que la partie principale de la puissance réactive à compenser est foumie par un compensateur statique de type conventionnel.

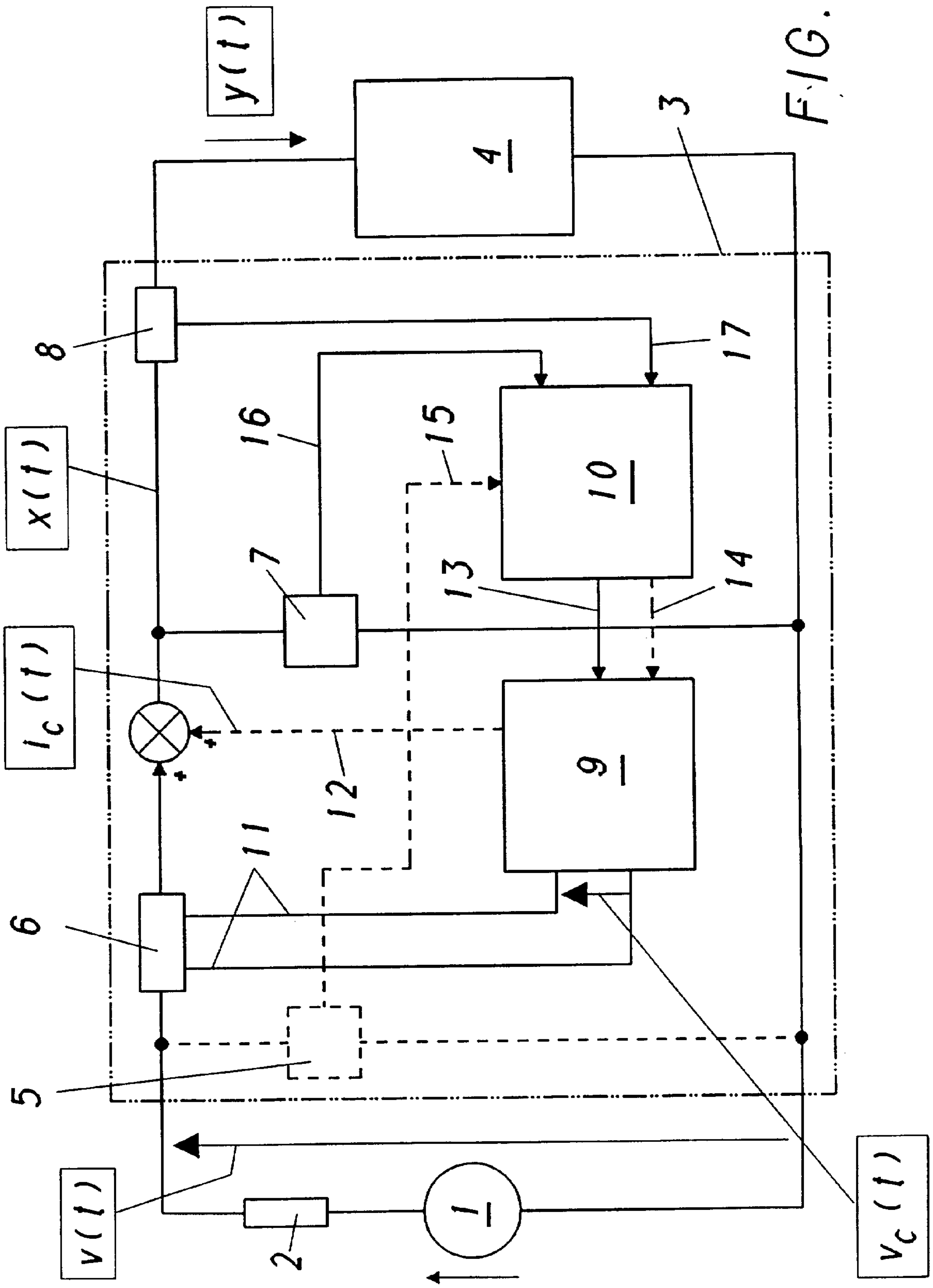


FIG. 1

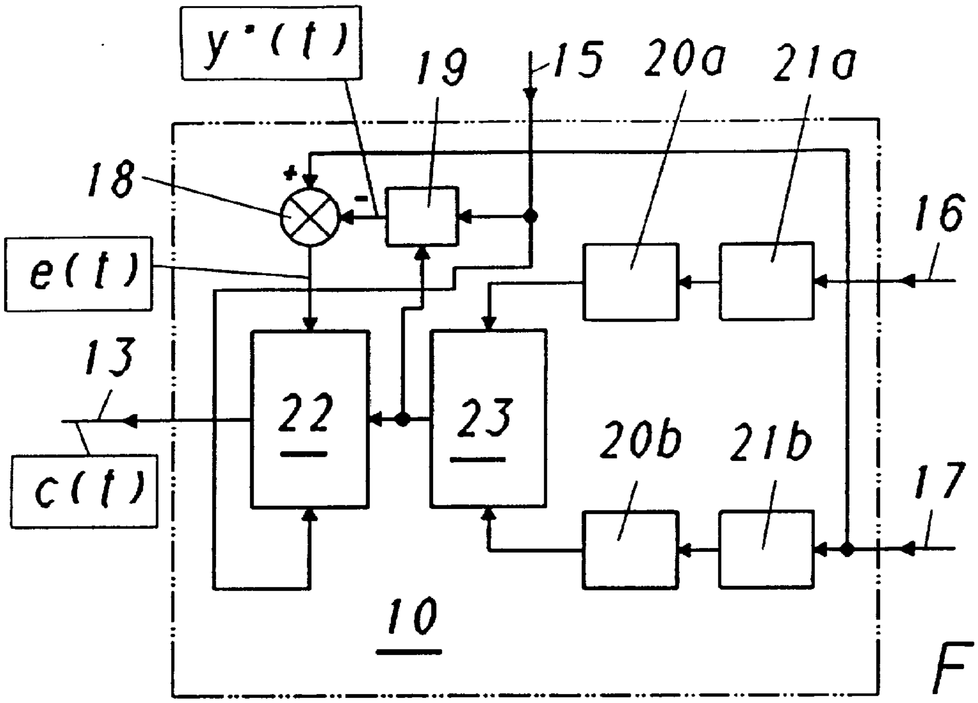
y*(t)
19
15
20a
21a
18
+
-
e(t)
16
13
22
23
c(t)
20b
21b
17
10

FIG. 2

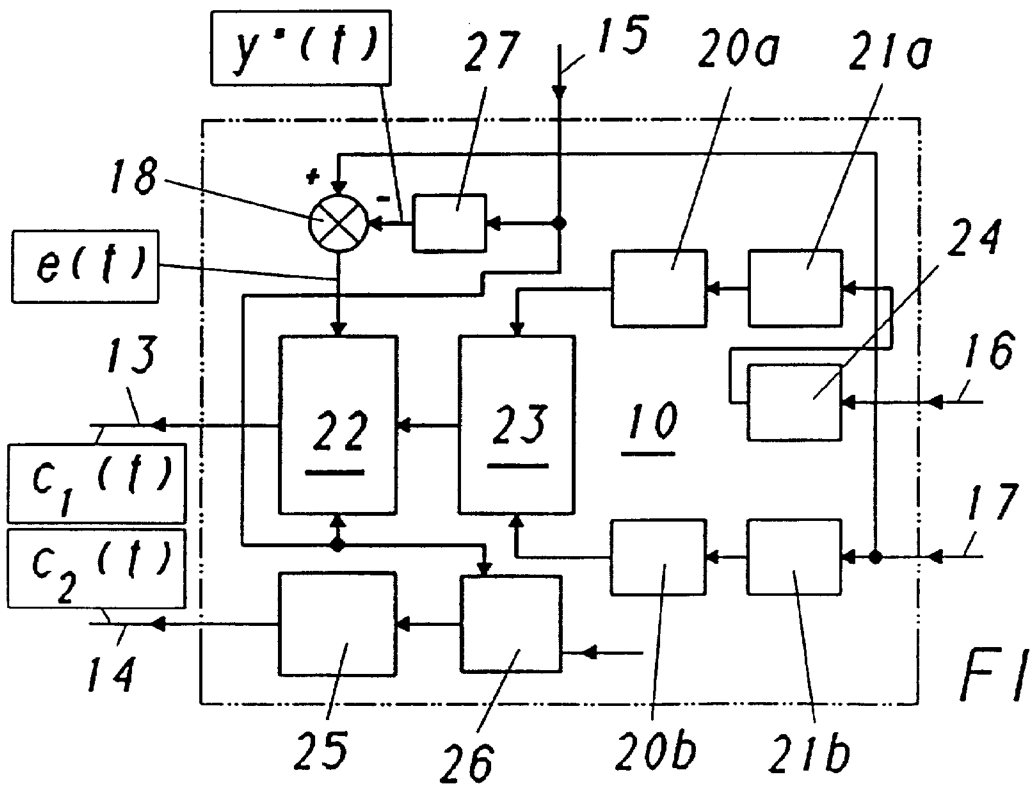
y*(t)
27
15
20a
21a
18
+
-
24
e(t)
16
13
22
23
10
c1(t)
17
c2(t)
14
25
26
20b
21b

FIG. 3

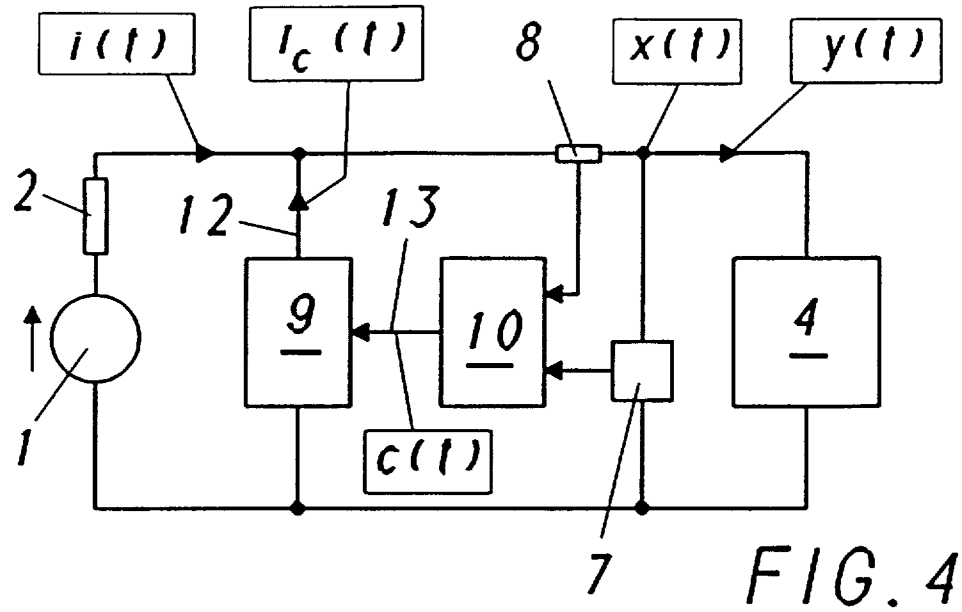


FIG. 4

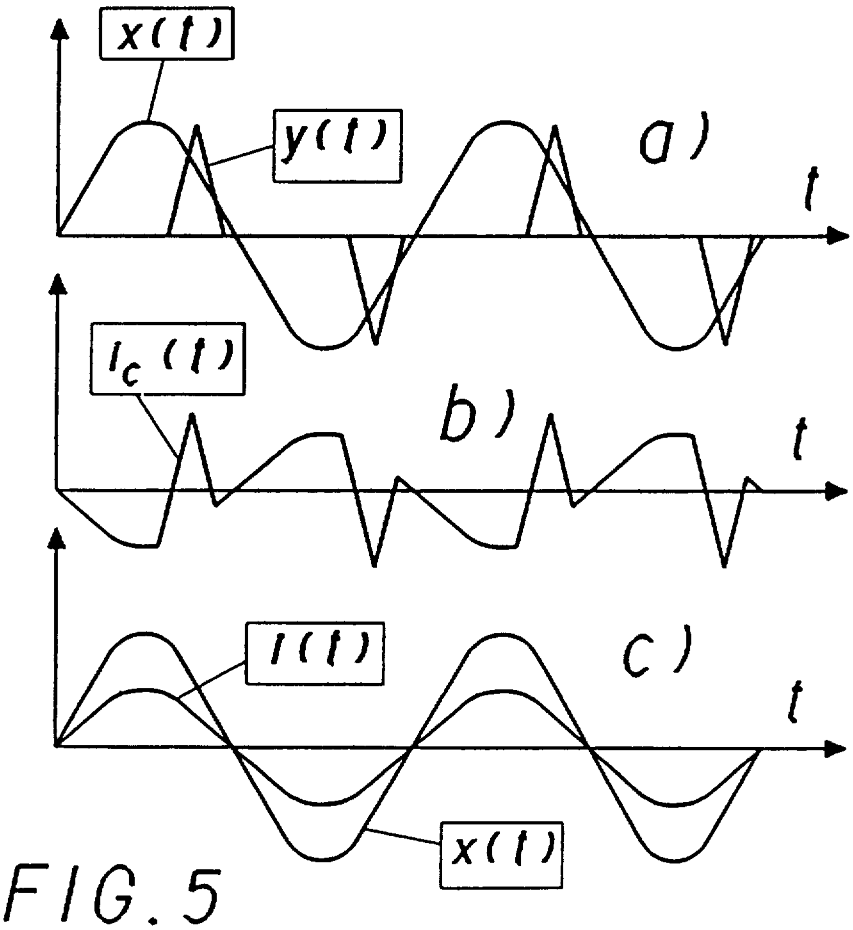


FIG. 5

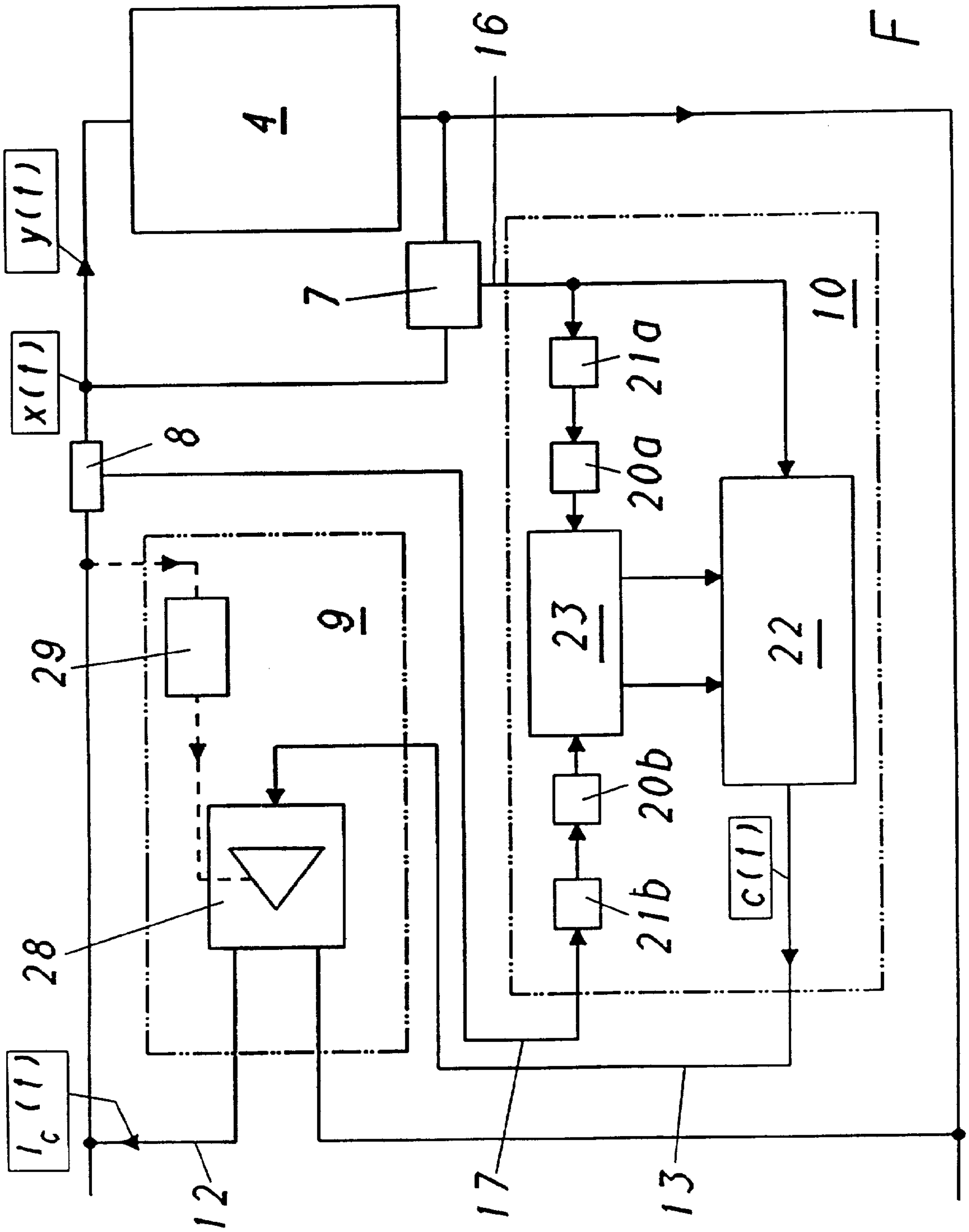


FIG. 6

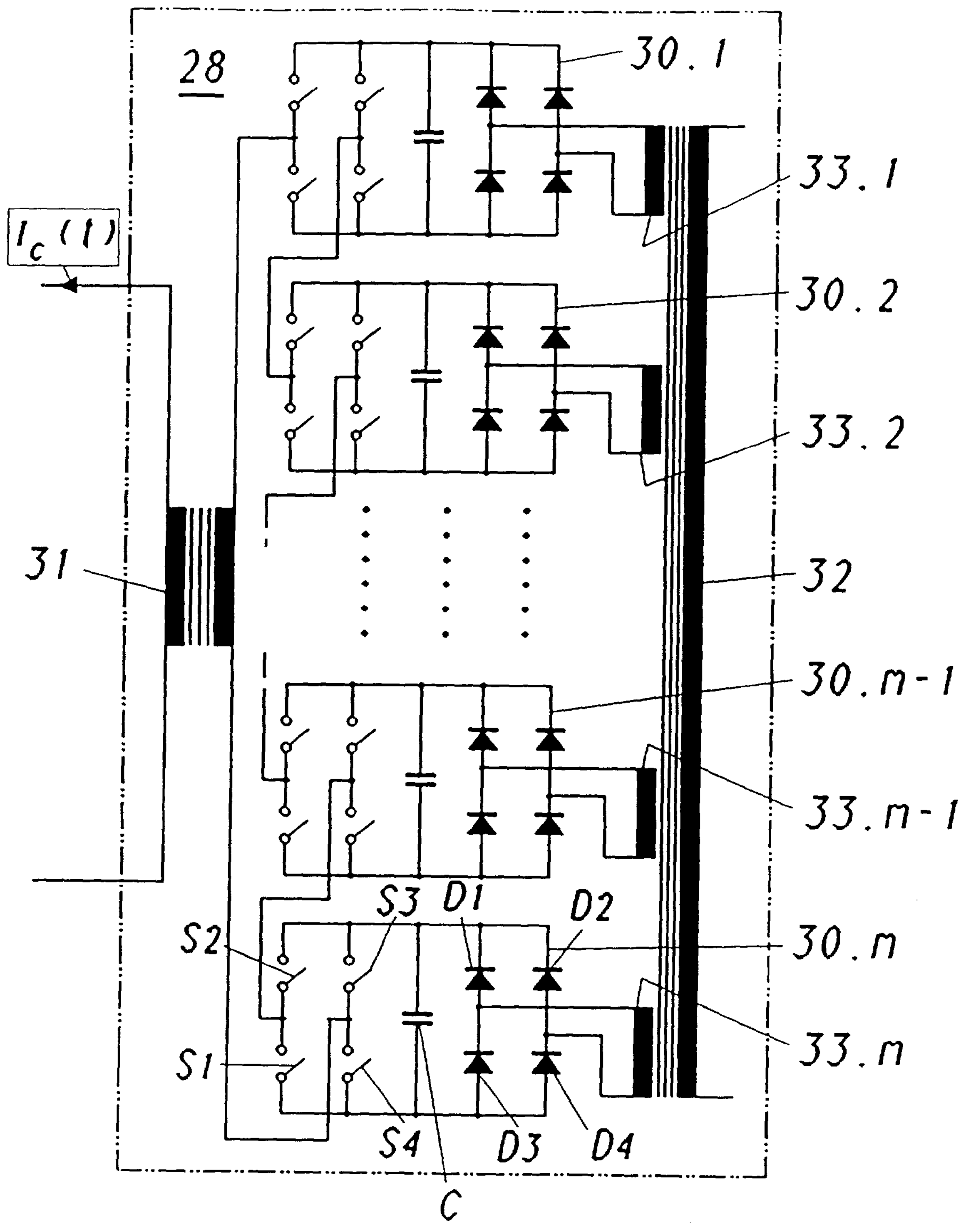
28
30.1
33.1
$I_c$ (t)
30.2
33.2
31
32
30.m-1
33.m-1
S3 D1
D2
S2
30.m
33.m
S1
S4
D3
D4
C

FIG. 7

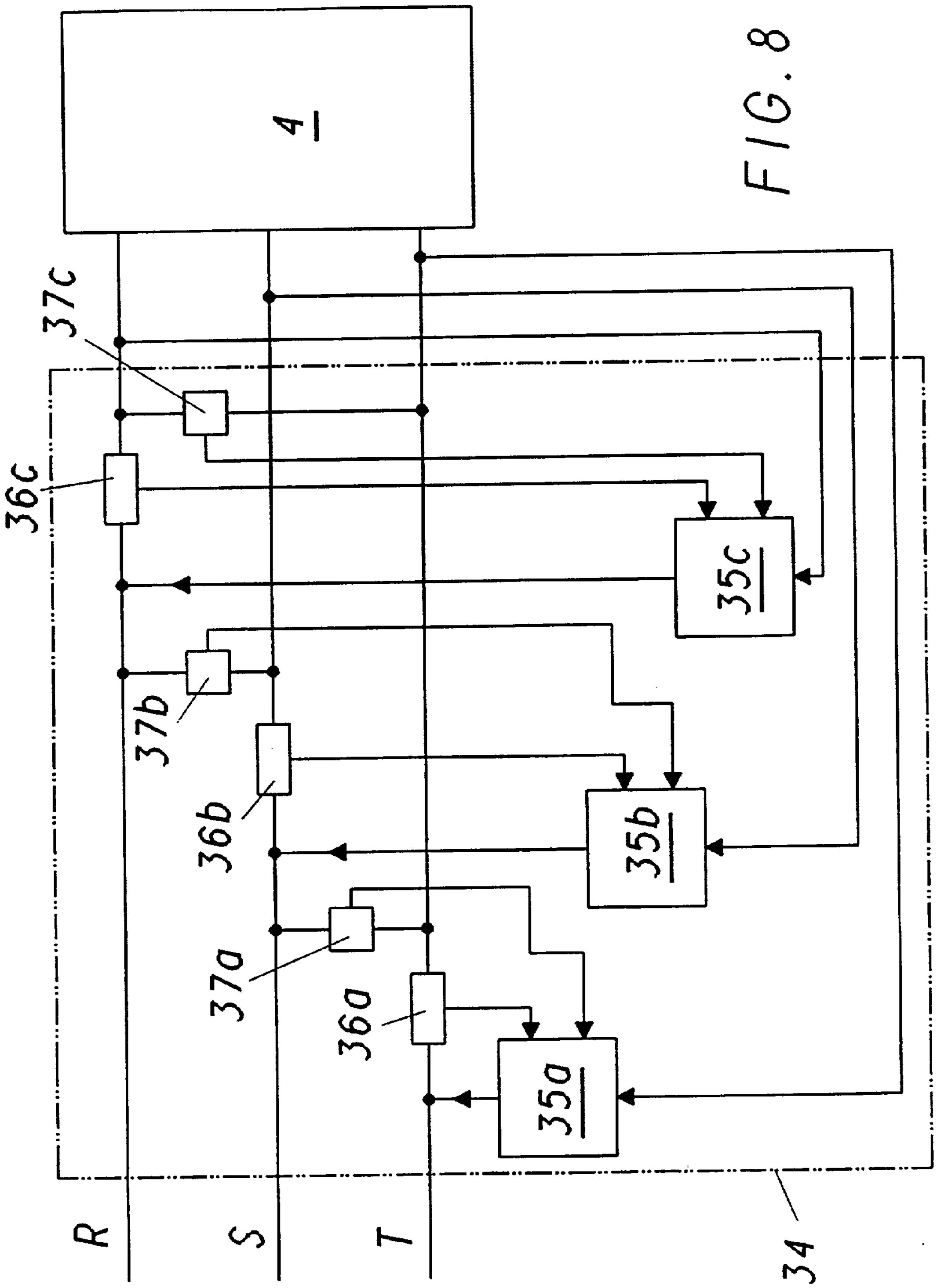


FIG. 8